# EUROPEAN PATENT APPLICATION

(11) **EP 1 842 728 A1**
(43) Date of publication of application: **10.10.2007**
(21) Application number: 07104432.5
(22) Date of filing: 19.03.2007
(51) Int. Cl.: B60R 9/00

(54) **Roof Rack Assembly**

(30) Priority: 07.04.2006 GB 0607064; 09.05.2006 GB 0609074; 12.06.2006 GB 0611573
(71) Applicant: Nissan Motor Manufacturing (UK) Ltd., Bedfordshire MK43 0DB (GB)
(72) Inventor: Picton, Christopher, Cranfield, Bedfordshire MK43 0DB (GB); Taylor, Jeremy, Cranfield, Bedfordshire MK43 0DB (GB); Kearey, Steve, Cranfield, Bedfordshire MK43 0DB (GB); Keen, Iain, Cranfield, Bedfordshire MK43 0DB (GB); Mitchinson, Joe, Cranfield, Bedfordshire MK43 0DB (GB); Rendell, Tom, Cranfield, Bedfordshire MK43 0DB (GB); Martin, Steve, Cranfield, Bedfordshire MK43 0DB (GB)
(74) Representative: Hufton, Victoria Alice

(57) **Abstract**

A roof rack assembly (1,20) is provided for a vehicle (15,22) having a roll-bar (14). The assembly comprises a support frame (9a,9b,10,18a,18b,19) and attachment means (2a,2b). The attachment means comprises jaws (3a,3b,4a,4b) pivotally mounted (7a,7b) to each other and configured to removably secure the support frame to the roll-bar. The inner surface (5a,5b,6a,6b) of the jaws of the attachment means is made of a rubber or plastics material.

## Description

This invention relates to a roof rack assembly for a vehicle having a roll-bar and, in particular, to an adjustable roof rack assembly for such a vehicle.

A vehicle is typically designed to carry both passengers and cargo. Inside the vehicle the carrying capacity is limited by the usable volume, which in a passenger-carrying vehicle can be quite small, so that only relatively small or compact objects can be carried. It is not practical or indeed desirable for people to exchange their cars for lorries, vans or trucks so as to be able to carry large or awkwardly shaped objects such as bicycles, surfboards etc. Therefore, it is common to fit a vehicle with an external luggage-carrying device, such as a roof rack or box, in order to transport large or awkwardly shaped objects.

Convertible cars and sports utility vehicles such as "pick-ups" and "4x4s" are gaining popularity, and the owners of such vehicles are often those who also enjoy outdoor pursuits, for example, cycling and surfing. Therefore, it would be useful to be able to fit a roof rack or other luggage-carrying facility to these vehicles. However, these vehicles are typically fitted with a removable roof and/or a (roof-) mounted bar; e.g. a roll-bar or lateral load-bar. This can make the fitting of a standard roof rack impractical or even impossible.

The shape and design of a roll-bar or lateral load-bar (e.g. for a convertible car, pick-up or 4x4), may be subject to aesthetic as well as functional considerations. For example, it may be desirable that the bar is visually attractive in cases where it is generally visible. However, where the roll-bar also performs the function of protecting the vehicle occupants in the event that the vehicle overturns, it is important that the bar has sufficient strength to carry out this vital function. Therefore, a (roof-) mounted bar, load-bar or roll-bar may be designed with a far larger cross-section than the bars of a typical roof rack, or the side-rails that appear on certain cars. In view of their shape and configuration, it means that roll-bars themselves are generally: (i) not suitable for use directly as a roof rack; and (ii) not compatible with roof rack adapters, which are designed for securing objects such as bicycles and surfboards to a roof rack.

Roof racks are usually designed to fit across the entire width of a vehicle, e.g. attaching to side rails that run the length of the vehicle roof. Hence, a roof rack is usually a large, heavy object. In use, such a roof rack creates a significant amount of air resistance, and this can affect the performance of the vehicle. Meanwhile, when the roof rack is not required, its size and weight can make it difficult to remove from the vehicle and impractical to store.

Therefore, it is often more convenient to leave it permanently attached to the vehicle, even when it is not being used.

Thus, there is a need for a roof rack that can be fitted to a roll-bar (roof-mounted bar or load-bar) of a vehicle. In addition, it would be desirable to have a roof rack that can be adjusted to the size necessary for the intended use, and which can be simply removed and conveniently stored when it is not in use.

This invention addresses at least some of the problems and disadvantages associated with the prior art.

In accordance with the invention, there is provided a roof rack assembly for a vehicle having a roll-bar comprising: a support frame; attachment means; wherein the attachment means comprises jaws pivotally mounted to each other and configured to removably secure the support frame to the roll-bar; and wherein the inner surface of the jaws of the clamp is made of a rubber or plastics material.

In one example of the present invention, the inner surface of the jaws of the clamp may be textured.

The roof rack assembly may further comprise at least one foot, wherein in use said foot supports the support frame at a predetermined distance from an outer surface of the vehicle and wherein the base of each foot contacts said outer surface of the vehicle. Advantageously, the base of the foot is formed of a rubber material.

In another example of the present invention, the attachment means may be a clamp and wherein one of the jaws of each clamp may be formed integrally with the attachment arm.

The roof rack assembly of the present invention may comprise two or more attachment arms, wherein said attachment arms may be inter-connected through one or more connecting arms.

In another example of the present invention, the one or more connecting arms have brackets adapted to match at least a part of the outer surface of said attachment arms. It may be preferable for at least one of said one or more connecting arms to be mountable at more than one position along said attachment arms.

The roll-bar of a vehicle may perform purely an aesthetic role, a functional role, or both an aesthetic and a functional role. Typically, a functional roll-bar is capable of performing the role of protecting the vehicle occupants in the event that the vehicle overturns, and for this purpose the bar should meet certain pre-determined physical specifications. However, as used herein, the term "roll-bar" may also refer to bars mounted onto a vehicle that visually have the appearance of a functional roll-bar, but may not in fact meet the physical requirements for such equipment; i.e the term "roll-bar" also includes bars that are attached to vehicles for partly/purely aesthetic reasons, or whose shape and configuration is determined partly or entirely to meet aesthetic criteria. Further, a roll-bar may be mounted to the roof of the vehicle, or to the sides or bottom of the vehicle - as in the case of a convertible or partly open-topped vehicle. In short, the term "roll-bar" can be considered to include vehicle-mounted bars, such as load-bars, in general.

Whilst it is possible that the roof rack assembly may be manufactured as an integral and permanent fixture of a vehicle, the roof rack assembly may be configured to be removable from the vehicle. Preferably, therefore, the attachment means can be readily engaged with and disengaged from the (roof-) mounted bar or roll-bar of the vehicle, so that the roof rack assembly can be simply installed or removed as required.

Any suitable means of attachment may be used, provided that it is capable of fixing the roof rack assembly securely to the roll-bar of the vehicle. By "securely" it is meant that the roof rack assembly, once properly fitted, will not undergo unacceptable levels of movement or vibration when in use (e.g. once properly fitted, the roof rack assembly will not rotate freely about the bar to which it is attached).

For example, the assembly may be provided with securing means, such as screws, bolts, wing-nuts etc., which are capable of engaging directly with the vehicle's roll-bar, or which are capable of engaging with other auxiliary devices that can be mounted onto the roll-bar, as needed. One convenient form of attachment means is a clamp, which can be adjusted between an open state in which it can be placed over and around the roll-bar of the vehicle and a closed state in which it can securely clamp onto the bar.

The jaws of the clamp may alternatively be adapted to match the outer surface of the bar and grip thereon. Since the cross-section of the roll-bar could have any number of profiles, e.g. circle, ellipse, square, rectangle, or other contoured surface, the inner surface of the jaws of the clamp will preferably define a similar shape. Accordingly, if the roll-bar has a circular cross-section of e.g. approximately 6 cm diameter, then in order to fit tightly to the outer surface of the bar, the inner surface of the jaws of the clamp would preferably define at least an arc of a circle of approximately 6 cm diameter. More preferably, the inner surface of the jaws of the clamp, once closed, would define a complete circle of approximately 6 cm diameter.

The jaws of the clamp may be further designed to increase the grip between the clamp and the bar. Therefore, the inner surface of the jaws may be constructed with or covered by a material that: (i) increases the grip between the jaws and the roll-bar; and/or (ii) protects the bar of the vehicle from being damaged by the tightened jaws. Suitable materials include rubber or a plastics material. In addition or in the alternative, the inner surface of the jaw may have a textured surface (e.g. scored, roughened or a generally uneven surface), in order to enhance the grip between the jaws and the bar.

The roof rack assembly may have one or more attachment means, e.g. one, two, three, four or more attachment means. However, the roof rack assembly typically has two attachment means, e.g. two clamps. By attaching the roof rack assembly to the roll-bar at more than one position, the roof rack assembly can be secured stably to the bar, such that vibration or other movement of the assembly (e.g. lateral movement), in use, is thereby reduced. Where a vehicle has more than one such (roof-) mounted bar or roll-bar, e.g. two roll-bars, the roof rack assembly may attach to one or more of the available bars.

The attachment means, e.g. the clamp, may be hinged, such that the juxtaposed jaws of the clamp are pivotally mounted to one another. A hinge can allow relatively easy operation, because the user can hold the clamp in position with one hand and tighten or lock the clamp with the other hand. The hinge can be positioned at either the top of the clamp (i.e. the side which in use is furthest from the vehicle), or the bottom of the clamp (i.e. the side closest to the vehicle).

The clamp is tightened using any suitable means known to the person of skill in the art. For example, the clamp may be tightened using a bolt and nut (or wing-nut), or other threaded fixing. Thus, one or both jaws of the clamp may have a threaded hole into which a screw or bolt can be tightened. A ratchet mechanism may be used to allow the clamp to be rapidly and easily closed and opened. Alternatively, a clip or other form of locking means may be placed around the juxtaposed jaws of the clamp to hold it shut. Such alternative means can be employed at the top of the jaws of the clamp, at the bottom of the jaws of the clamp, or at both the top and bottom of the clamp.

The roof rack assembly also comprises a support frame, which can be used either to support the load directly, or as a point of attachment for securing a roof rack adapter, such as a bicycle mount. The support frame provides a load-bearing platform, frame or volume, which can take any one of a variety of forms including: a frame, a solid surface, a slatted surface, or a box.

The support frame may comprise one or more arms, at least one of which is an attachment arm. The attachment arm is integral with or adapted to connect to the attachment means, such that the roof rack assembly can be mounted to the vehicle. The attachment arm may be constructed of the same piece of material as the attachment means, or if not, following manufacture it may be formed integrally with the attachment means, e.g. by welding, such that the attachment arm is permanently connected to the attachment means. However, the skilled person will appreciate that there are alternative means by which the attachment arm can be connected to the attachment means. For instance, the attachment means and the attachment arm may be provided as separate units, and a suitable connecting means employed, in use, to firmly secure the attachment arm to the attachment means. Such connecting means could include bolts, screws etc.

Conveniently, the one or more attachment arms are formed integrally with one jaw of a clamp and the second jaw of the clamp is attached thereto, advantageously by means of a hinge.

While it is envisaged that the roof rack assembly may have only one point of attachment to the roll-bar of the vehicle (and therefore, only one attachment arm); preferably, the roof rack assembly comprises two or more attachment arms, e.g. two, three, four, five or six attachment arms. Typically, the roof rack assembly comprises two attachment arms.

In use, the attachment arms may extend perpendicularly to the axis of the roll-bar to which the roof rack assembly is attached. Hence, in embodiments where there is more than one attachment arm, the arms are generally parallel to each other. Thus, where the vehicle roll-bar extends laterally across the vehicle, the attachment arms of the roof rack assembly may extend along the longitudinal axis of the vehicle (i.e. front to back). However, in alternative embodiments the attachment arms may not be parallel to each other, e.g. the arms may diverge from each other relative to their respective points of attachment to the vehicle, or they may converge so as to form or approach an apex.

When there is more than one attachment arm they may be inter-connected in order to provide increased stability and versatility of use. Connecting arms are arms that inter-connect two or more attachment arms. The connecting arms can take any convenient form, for example: multiple connecting arms may be in the form of a thin wire mesh, or a series of connecting arms of larger cross-section may give a ladder-like construction. One or more metal sheets of any suitable width may also be used to inter-connect the attachment arms.

The one or more connecting arms may be joined obliquely to the attachment arms (e.g. intersecting the attachment arms at an angle of less than or greater than 90° with respect to the axis of the attachment arms). Preferably, the one or more connecting arms are approximately perpendicular to the axis of the attachment arms so that the angle formed between the axis of the connecting arm and each attachment arm is approximately 90° (i.e. a right-angle). Thus, in use, the one or more connecting arms are preferably parallel to the axis of the roll-bar to which the roof rack assembly is attached.

In alternative embodiments, the one or more connecting arms may be bent so that when attached to a vehicle the length of the connecting arm parallel to the vehicle's roll-bar (i.e. the section extending laterally) is not in the same plane as the one or more attachment arms. For example, the connecting arm may have sections at each end, which in use extend e.g. vertically, and which are connected to each other by a laterally-extending bar.

As the person of skill in the art will appreciate, any suitable means can be used to connect the one or more connecting arms to the attachment arms. For example, a connecting arm may be formed integrally with the attachment arms (i.e. from the same piece of material). Alternatively, a connecting arm may be permanently attached or demountably attachable to the attachment arms after manufacture. Thus, the connecting arms may be permanently attached between attachment arms by welding. Alternatively, connecting arms may be demountably attachable to the attachment arms, e.g. using fixing brackets, screws, clamps or other suitable means. Hence, connecting arms and attachment arms may conveniently be provided with holes (perhaps screw-threaded bores) to accept screw or bolt fixings, which allow the arms to be locked together using a nut (or wingnut) etc.

In a further alternative embodiment, a connecting arm may comprise a bracket at each end, which brackets are configured to match at least a part of the outer surface of the attachment arms. Thus, the connecting arm is mountable to the attachment arms by placing the brackets against (or around) one or more sides of the attachment arms. For example, where the attachment arms have a circular cross-section, the connecting arm brackets are conveniently "C" shaped, or match an arc of a circle. Likewise, where the attachment arms have a square of rectangular cross-section, the bracket is beneficially shaped to match the outline of one or more sides of the square/rectangle, e.g. a square bracket. In such an embodiment, the connecting arm is beneficially secured to the attachment arms by way of screw or bolt fixings.

The support frame may additionally comprise further arms, struts or joints as may be useful for the construction and/or stability of the roof rack assembly. For example, the support frame may include further arms that run parallel to the attachment arm(s), but which do not have (or connect to) an attachment means. Alternatively, the support frame may include additional arms or struts that run parallel to the connecting arms, but which do not inter-connect the attachment arms. Such arms, struts etc. may be useful for increasing the strength or stability of the roof rack assembly, or for providing additional points of attachment for auxiliary devices.

Where there is more than one connecting arm, the arms may be of different cross-sectional widths. For example, a connecting arm that inter-connects the ends of the attachment arms distant from the attachment means (i.e. furthest from the point of attachment to the roof-mounted bar or roll-bar) may be larger and stronger than connecting arms nearer to the point of attachment. This may be desirable in order to maximise the structural strength of the roof rack assembly.

At least one of the connecting arms, or part thereof, typically has the same cross-section (or shape) as a bar of a standard/commercially available roof rack, e.g. a connecting arm may have a square cross-section. In this way, auxiliary devices that are designed to mount to standard roof racks, e.g. commercially available bicycle or surfboard mounts, can readily be attached to the roof rack assembly of the invention. However, the object to be transported may equally be attached directly to the roof rack assembly. For example, a bike may be directly attached to the roof rack assembly, e.g. via its front forks.

The attachment arms may also be designed to have (or be capable of having) auxiliary devices mounted thereto. Hence, in some embodiments, one or more of the attachment arms, or at least a part thereof, has a cross-section of the same shape and size as a standard/commercially available roof rack.

In another embodiment of the invention, in order to provide increased utility and convenience, one or more arms, e.g. one or more attachment arms and/or one or more connecting arms are extendible. Therefore, in these embodiments the roof rack assembly includes one or more extendible arm. In this embodiment, the size of the roof rack assembly can be increased or decreased as desired. For example, if the roof rack assembly is used to attach a bicycle mount for the purpose of carrying a single bicycle, the support frame (and in particular, a connecting arm thereof) need only be wide enough to attach the appropriate bicycle mount.

However, where it is anticipated that luggage or objects of different widths may be transported, the one or more connecting arms may be extendible. By extending the connecting arm(s) one or more objects such as bicycles or surfboards may be transported. In one such embodiment, in the non-extended state it may be possible to attach only one bicycle mount to the roof rack assembly; whereas in the extended state, it may be possible to carry two or more bicycles or one bicycle and one surfboard etc. by fitting more than one auxiliary device.

As noted, the connecting arms or the attachment arms may be independently extendible.

The attachment arm(s) may be extendible. Of course, where there are two or more attachment arms, preferably all should be extendible. By extending the attachment arms, loads of different lengths may be conveniently mounted to the vehicle. For instance, it is particularly useful to extend the attachment arms where the vehicle (particularly the rear thereof) is relatively short; where the roll-bar is positioned towards the rear of the vehicle; and where the object to be transported is relatively long in comparison to the length of the vehicle, e.g. in the case of a bicycle or a surfboard being transported on a small car.

Accordingly, in a situation where a roof rack assembly of the invention is attached to a vehicle roll-bar and the roof rack assembly is oriented with the attachment arms extending towards the front of the vehicle; by extending the attachment arms it is possible to carry longer objects without that object protruding beyond the rear of the vehicle.

If the support frame contains further arms or struts, these may also be extendible.

A further advantage of this embodiment of the invention is that when the roof rack assembly is not in use, its size can be reduced for convenience of carrying and storage.

The person of skill in the art will appreciate that any suitable means may be employed for creating the elongation or shortening in the extendible arms. For example, the extendible arms may be formed in a number of different, compatible sections/lengths, such that they can be connected to one-another until the desired length is reached. Any appropriate fixing means may be used to assemble and connect the separate sections of the extendible arm(s), as will be apparent to the person skilled in the art.

The extendible arms may telescopic. For example, comprising arms having lengths/sections of sequentially decreasing cross-section that are capable of being inserted into or retracted from a connected (or connectable) adjacent larger diameter length/section.

Where the roof rack assembly has one or more extendible arms, it is preferable that at least one of the lengths/sections of at least one of the extendible arms has a cross-section that is the same as a bar of a commercially available or standard roof rack, such that commercially available auxiliary devices such as bicycle mounts etc. can be attached to at least a section of an extendible arm.

In another embodiment, rather than (or in addition to) an extendible attachment arm, the roof rack assembly of the invention may be adjustable by changing the point of attachment of a connecting arm to the attachment arms. For example, in embodiments wherein a connecting arm is releasably mountable to the attachment arms (e.g. the connecting arm is screwed or bolted onto the attachment arms), the connecting arm may be securable at more than one point along each attachment arm. Hence, by securing a connecting arm at different points along the length of the attachment arms, the position of the connecting arm relative to the rear of the vehicle can be adjusted. In this case, the attachment arm may be provided with more than one hole (or bore) along its length, for providing multiple potential points of attachment to the connecting arm or connecting arm-bracket. Alternatively, the connecting arm may be provided with a bracket or clamping mechanism that is securable at different points (e.g. at any point) along the length of the attachment arm.

To increase the stability of the roof rack assembly when in use, and to protect the vehicle from possible damage caused by movement of the assembly, the roof rack assembly may have at least one foot. In use, the foot performs the role of helping to support the support frame at a predetermined distance from the outer surface of the vehicle. Therefore, the foot is attached to a lower (or bottom) surface of the support frame (i.e. the surface facing the vehicle), and in use the base of the foot rests on the outer surface of the vehicle.

The foot may be of any suitable length, e.g. up to 100 cm, up to 50 cm, up to 20 cm, up to 10 cm, up to 5 cm, or up to 3 cm. In some cases, the foot is preferably less than 1 cm. The length of the foot may be determined by the height of the roll-bar above the surface of the vehicle. It is preferred that the length of the foot is such that the support frame of the roof rack assembly (e.g. the central axis of the support frame) lies approximately parallel to the ground (i.e. horizontal). To increase the versatility of the roof rack assembly, the length of the foot may be adjustable; e.g. the foot may be extendible in a similar manner to that of the arms of the roof rack assembly.

There may be one or more feet, e.g. one, two, three, four or more feet. Typically, there are two feet. Each of the one or more feet may be attached to one or more attachment arms, one or more connecting arms, or to any other suitable point on the support frame. Each of the one or more feet may be attached towards the edges of the roof rack assembly, e.g. to the outermost attachment arms or connecting arms. Typically, there are two feet, one attached to each of the two outermost attachment arms.

In order to reduce the chance of damaging the outer surface of the vehicle, the foot, or the base of the foot, may be made from a non-scratching material, such a rubber or a suitable plastics material. The base of the foot may be formed/covered with a layer of rubber.

Where, in use, the lower surface of the support frame is positioned in close proximity to a surface of a vehicle (e.g. the roof of the vehicle), the foot may consist of a rubber pad, which is attached (e.g. using adhesive or a screw) directly to the lower surface of the support frame. The rubber pad may, of course, be of any suitable size or shape, such as a cube or a disc.

The shape of the base of the foot may be contoured to match closely (i.e. complement) the surface of the vehicle with which it interacts, so as to create a relatively stable interaction.

As will be appreciated by the skilled person, the support frame and attachment means of the roof rack assembly may be made of any suitable material. Preferably, the support frame is formed from a strong, light-weight material, such as a metal, e.g. steel. More preferably, the roof rack assembly is formed of a weather-resistant material (i.e. one that is non-oxidizing e.g. rust-resistant) such as aluminium or stainless steel. Alternatively, the roof rack assembly may be coated in a weather resistant material; e.g. by metal plating, e.g. chrome plating, or with a plastics or rubber coating.

Furthermore, according to the present invention there is provided a clamp for a roof rack assembly, such as that described above, comprising a pair of jaws and means for attaching to the roof rack assembly, said jaws being capable of moving between an open and a closed state, wherein in the closed state the jaws define a opening for receiving a section of a vehicle roll-bar. The opening defined by the jaws of the clamp preferably complements the outer circumference of the roll-bar section (i.e. the roll-bar's profile). Therefore, the inner surface of the jaws may define a circle, an ellipse, a rectangle, a square, or other contoured surface, depending on the shape of the roll-bar. The closed jaws of the clamp may define a circular opening for receiving a circular section of a vehicle roll-bar.

The jaws of the clamp may be pivotally mounted to one another, for example, with a hinge. In addition, the clamp preferably comprises releasable locking means (as previously described) for closing the jaws of the clamp and allowing the clamp to be opened as necessary. Preferably, the inner surfaces of the jaws of the clamp are formed of (e.g. made of or coated with) a material that, in use, will enhance the grip between the clamp and the roll-bar and protect the roll-bar from damage. For example, a rubber or plastics material may be used. In addition or in the alternative, the inner surfaces of the jaws of the clamp may be textured (e.g. scored, dimpled etc.) to enhance the grip of the clamp. Other preferred features of the clamp are described above.

The invention will now be described with reference to the accompanying figures in which:
Figure 1 is a perspective view of a roof rack assembly according to the invention;
Figure 2 is a schematic transverse section through line A-A of Figure 1, showing; (A) the roof rack assembly pre-installed; and (B) installed;
Figure 3 is a perspective view of a roof rack assembly according to the invention once installed on a vehicle;
Figure 4 is a side elevation of an installed roof rack assembly according to the invention having a bicycle mount and a bicycle attached thereto;
Figure 5 is a perspective view showing the upper surface of a roof rack assembly according to the invention;
Figure 6 is a perspective view showing the lower surface of a roof rack assembly according to the invention; and
Figure 7 is a perspective view of an attachment means according to the invention.

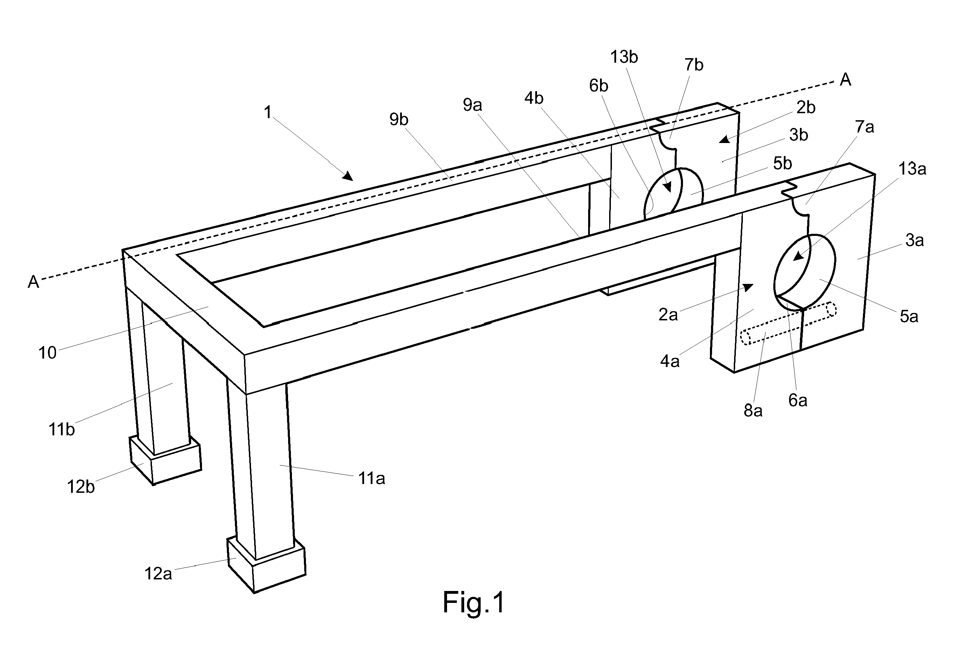

With reference to Figure 1, the roof rack assembly 1 has two clamps 2a, 2b. Each clamp comprises a pair of juxtaposed jaws 3a, 4a and 3b, 4b, respectively, having inner surfaces 5a, 6a and 5b, 6b (6b not shown), which define a circular openings 13a, 13b when the jaws 3a, 4a and 3b, 4b are closed. Each clamp 2a, 2b has a hinge 7a, 7b, respectively, connecting the top of the juxtaposed jaws 3a, 4a and 3b, 4b, and a threaded hole 8a, 8b (8b not shown) through the bottom of each of the juxtaposed jaws to accept a threaded fixing. The clamps 2a, 2b are integral with attachment arms 9a, 9b, respectively, of rectangular cross-section. The attachment arms 9a, 9b connect to the top of the clamps 2a, 2b, respectively, and extend parallel to each other. The ends of the attachment arms 9a, 9b distant from the clamps 2a, 2b are joined by a connecting arm 10, which has a cross-section similar to that of a standard roof bar section. Two feet 11 a, 11 b are attached to the underside of the attachment arms 9a, 9b, respectively, at a point distant from the clamps 2a, 2b. The bottom of each foot 11 a, 11 b has a rubber base 12a, 12b, respectively.

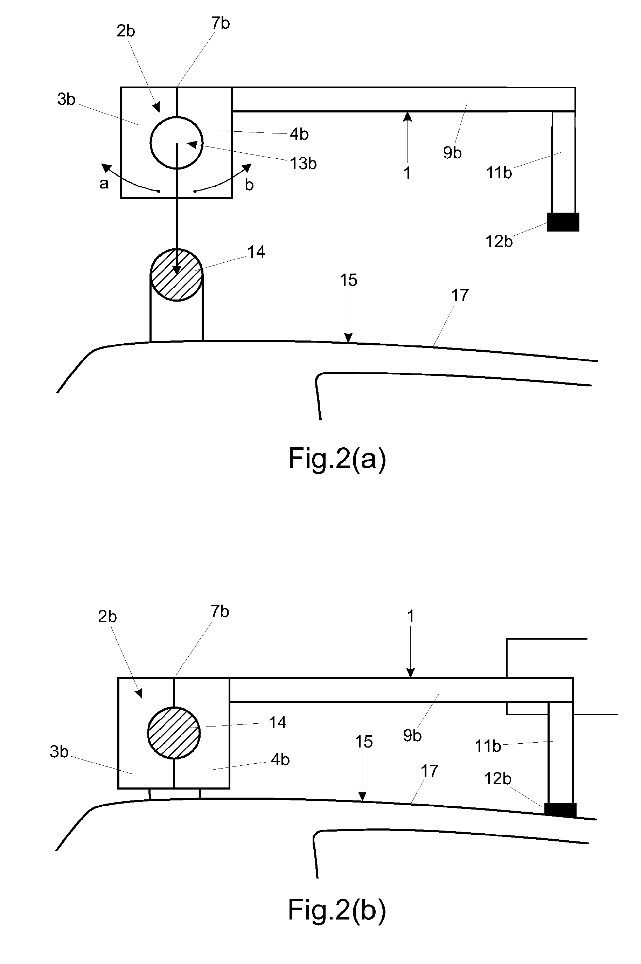

Figure 2(A) shows the roof rack assembly 1 of the invention through the line A-A of Figure 1, before it is installed onto the roof-mounted bar 14 of a vehicle 15. The jaws 3b, 4b of the clamp 2b are capable of opening in the direction of the arrows "a", "b", by pivoting about the hinge 7b. When the jaws 3b, 4b of the clamp 2b are closed, they define a circular opening 13b, which has a similar diameter to the profile of the roof-mounted bar 14. The jaws 3a, 4a of the non-visible clamp 2a are capable of opening and closing in a similar manner to the clamp 2b.

In Figure 2(B) the roof rack assembly 1 of the invention has been installed onto the roof-mounted bar 14 of the vehicle 15. The foot 11 b of the roof rack assembly rests on the outer surface (roof) 17 of the vehicle through the rubber base 12b. The length of the foot 11 b is such that the attachment arm 9b is approximately horizontal and approximately parallel to the roof of the vehicle.

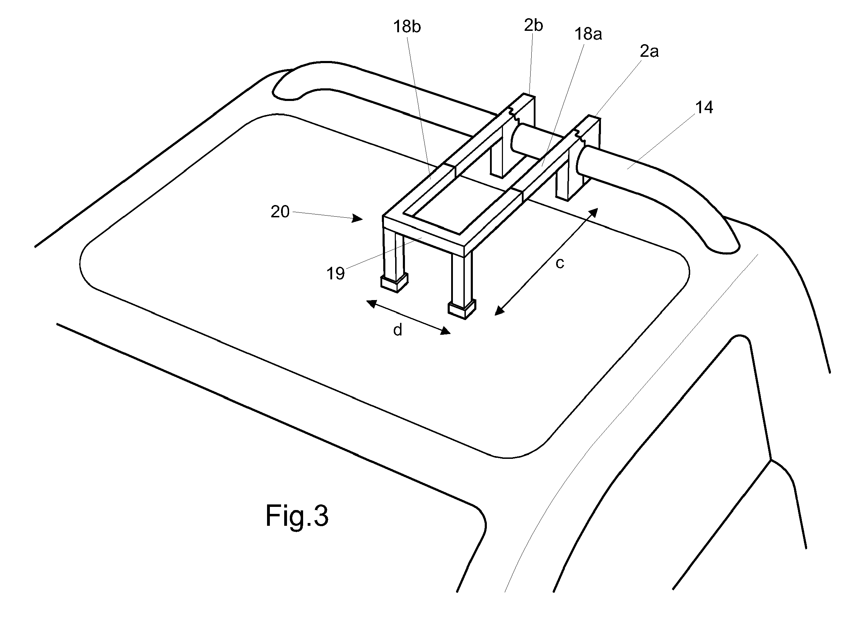

Figure 3 depicts an embodiment of a roof rack assembly 20 of the invention, which has extendible attachment arms 18a, 18b, as indicated by the arrow "c", and an extendible connecting arm 19, as indicated by the arrow "d". The size of the roof rack assembly can be changed by extending or contracting the attachment arms 18a, 18b and/or the connecting arm 19. Generally, at least the length of the connecting arm 19 is selected before installation of the roof rack assembly, or at least before the clamps 2a, 2b are closed onto the roof-mounted bar 14.

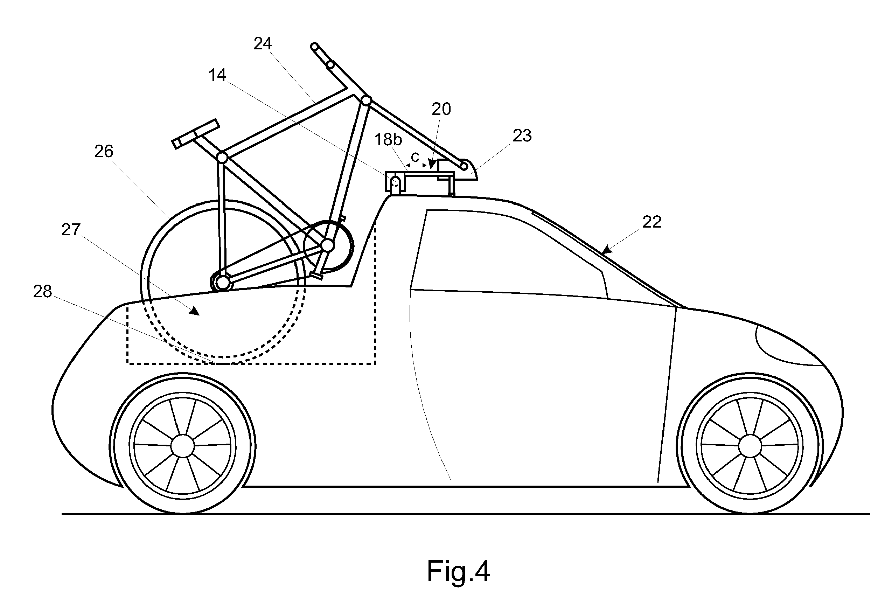

In Figure 4, a roof rack assembly 20 according to the invention is mounted onto the roll-bar 14 of a pick-up vehicle 22, having a rear loading space 27 with a loading platform 28. The roof rack assembly 20 is oriented such that the attachment arms 18a (not shown) and 18b point towards the front of the vehicle. A commercially available auxiliary bicycle mount 23 is fitted to the forward-most connecting arm (not visible), and a bicycle 24 is mounted onto the bicycle mount 23. The rear section of the bicycle 24 extends into the loading space 27 of the pick-up vehicle 22, and the rear wheel 26 rests on the upper surface of the loading platform 28. By extending or retracting the attachment arms 18a (not shown) and 18b (as indicated by the arrow "c"), the position of the bicycle can be moved forwards or backwards relative to the vehicle 22. By adjusting the roof rack assembly in this way, it not only facilitates its use for carrying loads on different lengths of vehicle, but it also makes it easier to mount optimally different lengths of load on a particular length of vehicle.

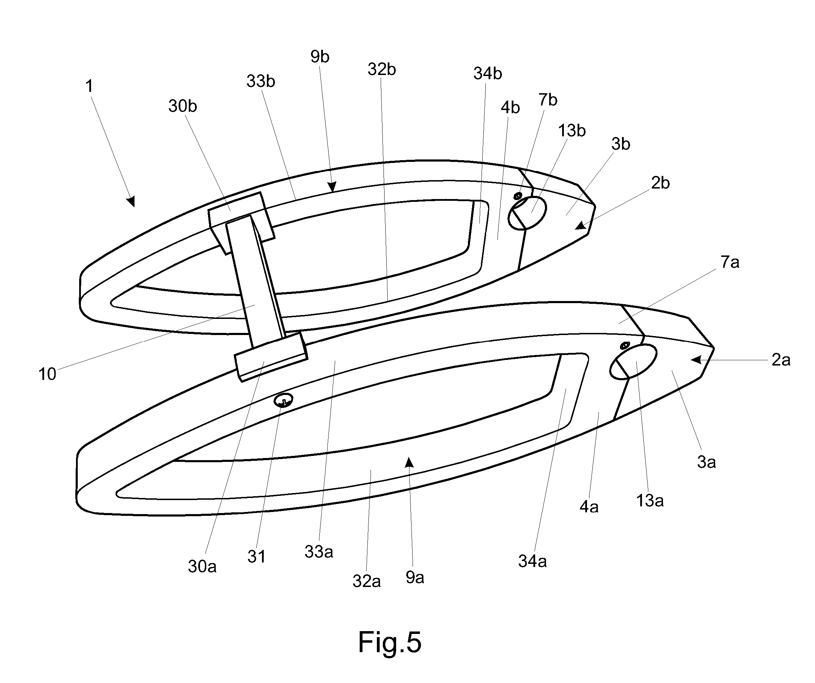

Turning to Figure 5, a roof rack assembly 1 according to the invention has parallel attachment arms 9a, 9b, each of which is shaped like a curved-sided isosceles triangle, with curved long sides 32a, 33a and 32b, 33b respectively, and a relatively straight short side 34a, 34b, respectively. The short side 34a, 34b of the attachment arms 9a, 9b is formed integrally with one jaw 4a, 4b of the clamps 2a, 2b, respectively. The other jaws 3a, 3b of clamps 2a, 2b are attached via hinges 7a, 7b, respectively to the attachment arms. In this embodiment, the jaws 3a, 3b are shaped to match the curved apex of the attachment arms 9a, 9b. A tubular connecting arm 10 with a square cross-section has square brackets 30a, 30b at each end, which mount on the upper sides 33a, 33b of the attachment arms 9a, 9b. The brackets 30a, 30b are secured to attachment arms 9a, 9b using a screw fixing 31 (fixing to attachment arm 9b not shown).

In alternative embodiments, the connecting arm 10 is securable at more than one position (e.g. at any position) along the attachment arms 9a, 9b. In addition, the connecting arm 10 may be rotatable about the brackets 30a, 30b, such that the orientation of its sides can be adjusted.

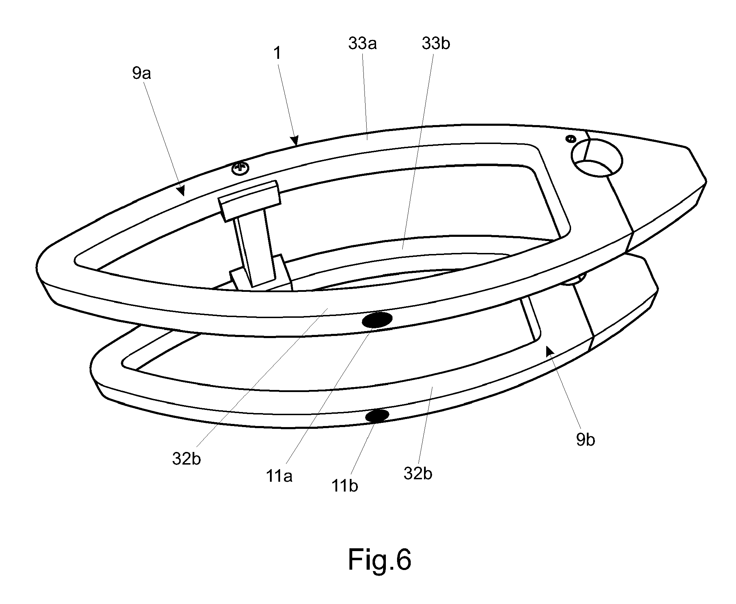

As shown in Figure 6, the lower sides 32a, 32b or attachment arms 9a, 9b, respectively, are fitted with feet 11 a, 11 b. In use, the lower sides 32a, 32b of the attachment arms 9a, 9b are in close proximity to a surface of a vehicle, and therefore, feet 11 a, 11 b are thin rubber pads. Because the feet 11 a, 11 b are relatively short and the lower sides 32a, 32b are curved, the feet 11 a, 11b are mounted such that in use, they are positioned at approximately the lowermost point of the attachment arms 9a, 9b.

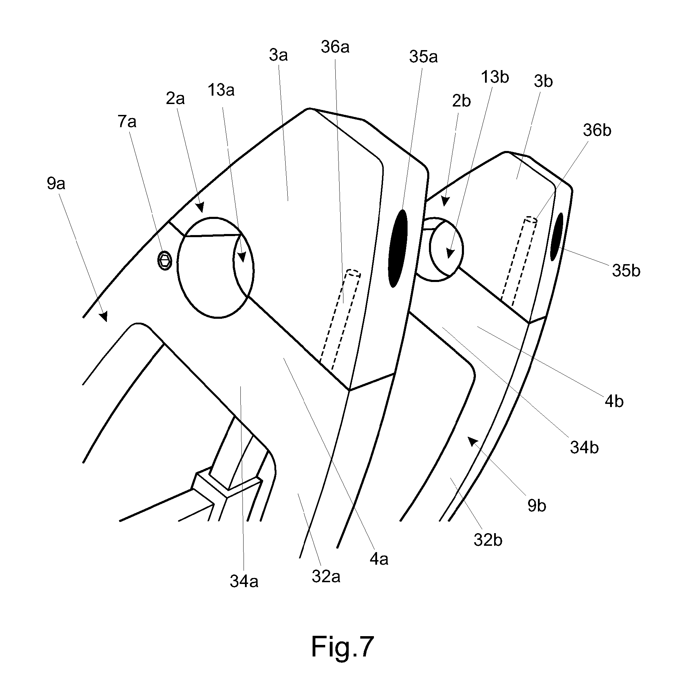

Turning to Figure 7, jaws 3a, 3b of clamps 2a, 2b, respectively, are provided with orifices 35a, 35b, respectively, which conceal the means for tightening and securing the jaws 3a, 3b against the juxtaposed jaws 4a, 4b of clamps 2a, 2b.

Conveniently, each of jaws 4a, 4b is fitted with a bolt (or other fixing, not shown), which passes through internal bores 36a, 36b in jaws 3a, 3b, respectively, when the clamps 2a, 2b are closed. The free end of each bolt terminates in the orifices 36a, 36b. To secure clamps 2a, 2b in the closed state a nut (or other fixing, not shown) is wound onto the free end of the bolts to tighten and secure jaws 3a, 3b relative to jaws 4a, 4b, respectively. Orifices 36a, 36b allow access to the securing means of the clamps 2a, 2b, but serve to largely conceal the mechanism from external inspection.

## Claims

1. A roof rack assembly (1; 20) for a vehicle (15; 22) having a roll-bar (14), the assembly (1; 20) comprising:
a support frame (9a, 9b, 10; 18a, 18b, 19); and
attachment means (2a, 2b);
wherein the attachment means comprises jaws (3a, 4a, 3b, 4b) pivotally mounted (7a, 7b) to each other and configured to removably secure the support frame to the roll-bar; and
wherein the inner surface (5a, 6a, 5b, 6b) of the jaws (3a, 4a, 3b, 4b) of the attachment means (2a, 2b) is made of a rubber or plastics material.

2. The roof rack assembly (1; 20 according to claim 1, wherein the inner surface (5a, 6a, 5b, 6b) of the jaws (3a, 4a, 3b, 4b) of the attachment means (2a, 2b) are textured.

3. The roof rack assembly (1; 20) according to claim 1 or claim 2, further comprising at least one foot (11 a, 11 b), wherein in use said foot supports the support frame (9a, 9b, 10; 18a, 18b, 19) at a predetermined distance from an outer surface (17) of the vehicle (15, 22) and wherein a base (12a, 12b) of each foot (11 a, 11 b) contacts said outer surface of the vehicle.

4. The roof rack assembly (1; 20) of claim 3, wherein at least the base (12a, 12b) of the foot (11 a, 11 b) is formed of a rubber material.

5. The roof rack assembly (1; 20) according to preceding claims, wherein the attachment means is a clamp (2a, 2b) and wherein one of the jaws (4a, 4b) of each clamp is formed integrally with the attachment arm (9a, 9b; 18a, 18b).

6. The roof rack assembly (1; 20) according to any of the preceding claims, which comprises two or more attachment arms (9a, 9b; 18a, 18b), wherein said attachment arms are inter-connected through one or more connecting arms (10; 19).

7. The roof rack assembly (1; 20) according to any of the preceding claims, wherein the one or more connecting arms (10; 19) have brackets (30a, 30b) adapted to match at least a part of the outer surface of said attachment arms (9a, 9b; 18a, 18b).

8. The roof rack assembly (1; 20) according to any of the preceding claims, wherein at least one of said one or more connecting arms (10; 19) are mountable at more than one position along said attachment arms (9a, 9b; 18a, 18b).
